# EUROPEAN PATENT SPECIFICATION

(11) **EP 4 169 631 B1**
(45) Date of publication and mention of the grant of the patent: **02.10.2024**
(21) Application number: 21203669.3
(22) Date of filing: 20.10.2021
(51) Int. Cl.: B09B 3/00

(54) **WASTE FRACTION PROCESSING FRICTION EXTRUDER UNIT**
REIBUNGSEXTRUDEREINHEIT ZUR VERARBEITUNG VON ABFALLFRAKTIONEN
UNITÉ D'EXTRUSION À FRICTION POUR LE TRAITEMENT DE FRACTIONS DE DÉCHETS

(43) Date of publication of application: 26.04.2023
(73) Proprietor: Technische Universität Graz, 8010 Graz (AT)
(72) Inventor: de Traglia Amancio Filho, Sergio, Graz (AT); Effertz, Pedro, Graz (AT); Sommitsch, Christof, Graz (AT); Haas, Franz, Graz (AT); Pina Cipriano, Gonçalo, Caldas da Rainha (PT)
(74) Representative: Patentanwaltskanzlei Matschnig & Forsthuber OG

(56) References cited:
- CN-U- 212 636 269

## Description

### Field of the invention and description of prior art

The present invention relates to a waste fraction processing friction extruder unit comprising a receptacle for receiving fragments of metallic or polymeric waste fractions, said receptacle comprising an outer tube, said outer tube being closed at an end section defining a space for collecting waste fractions entered into the receptacle, and an extrusion device, said extrusion device comprising a cylindrically shaped inner tube, said inner tube having a longitudinal axis and an inner diameter, a friction extruder screw that is coaxially arranged within the inner tube, and an extrusion nozzle connected to the inner tube, wherein the friction extruder screw extends at least until to the extrusion nozzle, said extrusion nozzle being configured to receive material transferred by the friction extruder screw towards the nozzle and to shape, from said material, a continuous wire or filament, wherein the inner tube extends from the space for collecting waste fractions, and wherein the friction extruder screw extends within the inner tube into the space for collecting waste fractions.

Depending on the material, the process of friction extrusion for metals according to prior art is conducted in either hot or cold variants which press a metallic billet with a hydraulic ram through a die. These processes demands high energy inputs both in terms of hydraulic rams and heating coils. Furthermore, in such processes if waste material is to be used for extrusion, it has to be carried out in a separate process to create a workable billet, whereas the present invention will process the waste directly in the (Friction Extrusion Unit) FEU.

The process of friction extrusion for plastic according to prior art is conducted as follows: Plastic pellets are gravity fed from a top mounted hopper into the barrel of the extruder where, under the action of an extrusion screw and heaters, it undergoes a thermomechanical transformation into continuous filament. Such an extruder apparatus is only suitable for polymers and additives such as colorants. UV inhibitors are mixed prior to the arriving at the hopper.

Known friction stir extrusion (FSE) according to the prior art works as follows: A rotating tool is used to produce heat and plastic deformation through friction between the tool itself and the chips to be recycled (into a hollow cylindrical chamber) by compacting, stirring and extruding the material. The length of the wire that can be produced in a single operation is very limited. Moreover, this technology is prone to vibrations and instability. CN212636269U discloses a further known prior art.

### Summary of the invention

It is an object of the invention to provide technology that allows to overcome the draw backs of the prior art.

This object is achieved by way of a waste fraction processing friction extruder unit of the above mentioned kind, wherein the diameter of the thread of the friction extruder screw essentially matches the inner diameter of the inner tube, and wherein the friction extruder screw has a shaft of conic shape, wherein the diameter of the conic shape of the shaft increases with increasing distance from the space for collecting waste fractions.

The present invention allows reuse of metal swarf as raw material otherwise considered as waste (circular economy). For instance in the metal forging industry, the swarf generated by milling of forged parts can be up to 90% from the initial billet weight for titanium parts. It allows the use of self-generating friction energy as the main source to convert raw material into wire. The invention is suitable to extrude metal wire and/or polymeric filament. It can be used to manufacture coated wires and reinforced polymeric filaments.

Also, the invention allows merging the wire and filament post-extrusion processing step into one, making it flexible to handle metal or polymer.

Of course, the present invention is also suited to be fed with newly purchased/produced materials, already existent waste fractions or mixtures thereof.

Preferably, the outer tube has a cylindrical shape and is arranged coaxial with the inner tube, and wherein the end section of the outer tube is closed with a bottom element.

Advantageously, the end section of the outer tube is arranged on a lower end of the outer tube. Preferably, the waste fraction processing friction extruder unit further comprises an electric motor that is configured to rotate the friction extruder screw around its axis.

Advantageously, the diameter of the thread of the friction extruder screw is within a range of 95% to 99% of the inner diameter of the inner tube.

Preferably, the cone angle of the conic shape of the shaft is between 10° and 22°, in particular between 15° and 17°.

Preferably, the cone angle is essentially constant along the longitudinal extension of the shaft.

Preferably, the lead of the thread of the friction extruder screw is between 80mm and 120mm.

Advantageously, the longitudinal length of the friction extruder screw is between 1000mm and 1600mm.

Preferably, the friction extruder screw is hollow and comprises coaxial horizontal discs being distanced to another along the longitudinal axis of the screw and extending orthogonal to the longitudinal axis along the diameter of the conic shape of the shaft in order to increase the stiffness of the extruder screw.

Advantageously, the friction extruder screw is made of wear and temperature resistant metallic material such as stainless steel or Ni-based materials. Surface treatments to increase surface wear and corrosion resistant could be also applied.

Preferably, flanks of the thread of the friction extruder screw essentially extend orthogonally from the longitudinal axis of the friction extruder screw, and wherein preferably the flank angle of these flanks is zero.

Advantageously, each flank of the thread of the friction extruder screw comprises
*a straight section having a rectangular cross section, said straight section extending towards
*a broadened end section, wherein broadening of the cross section of the flank is realized solely by expansion of an upper side of the flank, said upper side being curved upwards thus increasing the cross section of the broadened end section when compared to the straight section, wherein the upper side faces away from the space for collecting waste fractions. The straight section extends in a direction orthogonal to the axis of the screw (in a cross sectional view, i.e. in a radial direction).

Preferably, at the end of broadened end section the upwards curved shape of the flank reduces the distance to the proximate upper flank between 20% and 50% when compared to the distance between the straight sections of the flanks.

Advantageously, the length of broadened end section amounts between 25% to 70%, in particular 40% to 60%, of the lead of the thread of the friction extruder screw.

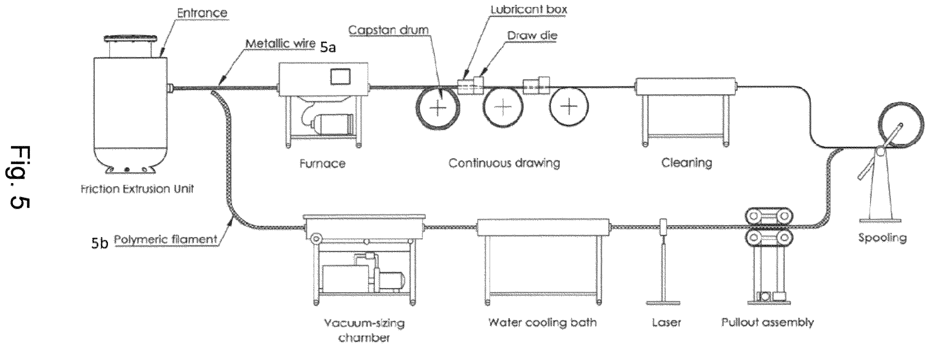

The invention also can provide a new method of producing welding and additive manufacturing (AM) wires, as well as polymeric filament for 3D printing using friction energy to convert metal swarf, or polymeric pellets, into continuous wire or filament rods. Figure 5 shows the processing stages that can fulfil the new method by utilizing the friction extruder unit according to the invention. The friction energy entailed in the process will generate heat which will be reutilised to assist the upstream drawing stages. Notwithstanding, for higher temperature materials a heating unit can be added for better formability in the drawing stages. Subsequently, the metallic wire or polymeric filament undergo through a series of drawing stages to reduce diameter and tailor final mechanical properties of the rod extruded by the FEU into the final product. i.e. fine wire or filament spooled in a drum. At this stage, the wire or filament is ready to be commercialised as welding wire or polymeric filament for welding and AM purposes.

The task of transforming the metallic waste related to subtractive manufacturing, (i. e. milling, grinding, drilling, etc.) into continuous wire or filament, thus eliminating waste and enabling the continual use of metallic swarf and recycled polymer.

This is made possible using friction as the energy source to promote metal dynamic recrystallisation or polymeric softening or remelting. ln a preferable configuration, the metallic wire or polymeric filament are produced with a vertically arranged extrusion setup. The machine can be composed essentially of two concentric cylindrical tubes, where the outer one is the reservoir for metallic swarf or polymeric pellets and the inner one is the actual core of the machine. The latter can be composed by a conical friction extruder screw driven in a rotational motion by a motor (e.g. hydraulic, e/electrical, etc.) bolted inside the top section of the inner cylinder, an top of the extruder screw. The metal swarf or polymeric pellets will be forced by the conical friction extruder screw to move in an upward motion. With the increase in thread lead the volume decreases as a result of the conically shaped shaft. The decrease in volume will result in a significant change in pressure, friction and consequently temperature. The combined effect of these three contributions will promote the dynamic recrystallization, viscoplastic flow in the case of metallic wire extrusion, and gradual softening or melting of the polymer pellets for filament extrusion. Finally, viscoplastic metal or melted polymer are extruded in a continuous wire or filament through a nozzle positioned at the same height as the last screw thread. The metallic wire extrusion can take place in solid state regime, i. e. bellow the melting temperature of the swarf material, and in polymeric filament extrusion such temperature is surpassed. The use of possible different die geometries for producing solid or hollow wires and filaments, allows the fabrication of co-extruded wires. For instance a premanufactured metal/ wire can be coated with extruded meta/ or polymer (e.g., providing functionality or protection). In the case of polymer filaments, continuous fibre reinforcement can be directly added during friction extrusion .

In the following, exemplary features of the friction extruder screw are explained:
One probable material candidate to produce the screw is Stainless Steel (e.g. 316L) along with a nitriding process to harden the screw surface against abrasion, hence wear.

c. Rotational Speed (RPM) - the table below summarises preferred rotational speed enabling sufficient energy to process metallic and polymeric materials in dependence of the material. The proposed values were based on existing literature of other friction based and extrusion processes. Processable materials are also mentioned.

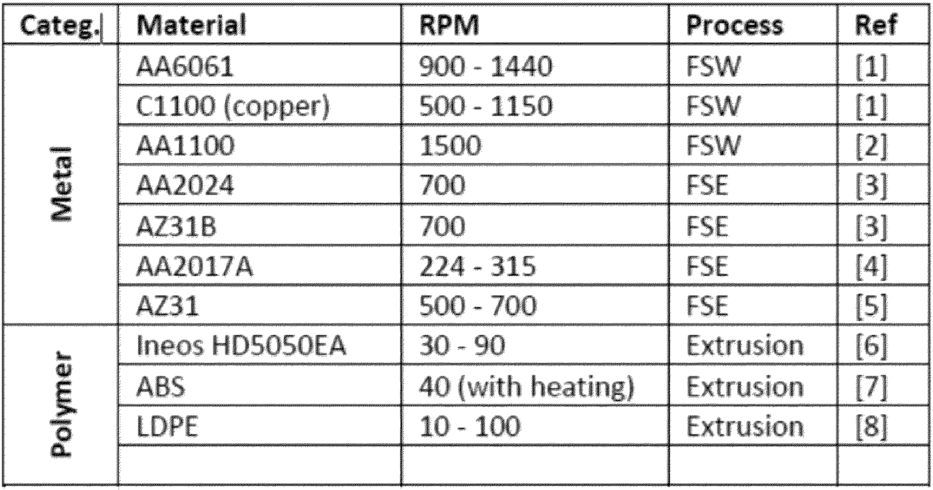

Most polymer extruders possess heating coils, providing an additional amount of energy to promote melting. The present idea for a machine set up focuses more on the use of frictional energy, thus the lack of heating units are compensated with a comparably higher rotational speed

Working temperatures - The temperature range that ensures dynamics recrystallisation for metals, and melting for polymers, of relevant material types for to be used in present invention are presented in the table below.

| **Categ.** | **Class** | **Temperature range [°C]** | **Ref** |
|---|---|---|---|
| Metall | Aluminium Alloys | 425 - 500 | [9][10] |
| | Copper Alloys | 460 - 530 | [11] |
| | Magnesium Alloys | 300 - 600 | [12] |
| Polym. | Thermoplastics | <180-320 | - |

### References:

[1] L. V Manisegaran et al., "Optimizing friction stir weld parameters of aluminum and copper using conventional milling machine," AIP Conf. Proc., vol. 1958, no. 1, 2018.
[2] M. Mili, T. Vuherer, K. Palani, C. Elanchezhian, A. Boneag, and M. A. Constantin, "Effect of rotation speed and welding speed on Friction Stir Welding of AA1100 Aluminium alloy," IOP Conf. Ser. Mater. Sci. Eng., vol. 346, 2018, doi: 10.1088/1757-899X/346/1/012060.
[3] D. Baffari, G. Buffa, D. Campanella, and L. Fratini, "Design of Engineering continuous Friction Extrusion machines chip recycling : issues chip recycling : issues and difficulties Design of continuous Friction Stir Extrusion machines for metal," Procedia Manuf., vol. 15, pp. 280-286, 2018, doi: 10.1016/j.promfg.2018.07.220.
[4] W. Anna, K. Mroczka, and J. Morgiel, "Modification of Mechanical Properties of Aluminium Rods via Friction-Extrusion Method," Mater. MDPI, vol. 13, no. 5224, 2020.
[5] G. Buffa, D. Campanella, L. Fratini, and F. Micari, "AZ31 magnesium alloy recycling through friction stirextrusion process," Int. J. Mater. Form., pp. 613-618, 2016, doi: 10.1007 / s12289-015-1247-6.
[6] J. Vera-Sorroche, A. Kelly, E. Brown, P. Coates, and N. Karnachi, "Thermal optimisation of polymer extrusion using in-process monitoring techniques," Appl. Therm. Eng., vol. 53, no. 2, pp. 405-413, 2013, doi: 10.1016/j.applthermaleng.2012.04.013.
[7] C. I. Chung, Extrusion of Polymers Theory & Practice, 2nd ed. Hanser Publishers.
[8] S. Ebeid and I. Fikry, "Effect of Geometry and Rotational Speed on the Axial Pressure Profile of a Single Screw Extrusion," Int. J. Innov. Sci. Eng. Technol., vol. 2, no. 1, 2016.
[9] M. W. Mahoney, C. G. Rhodes, J. G. Flintoff, R. A. Spurling, and W. H. Bingel, "Properties of Friction Stir Welded 7075 T651 Aluminum," Metall. Mater. Trans. A, vol. 29, no. July, 1998.
[10] L. E. Murr, G. Liu, and C. McClure, "A TEM study of precipitation and related microstructures in friction-stir-welded 6061 aluminium," J. Mater. Sci., vol. 33, pp. 1243-1251, 1998.
[11] Y. M. Hwang, P. L. Fan, and C. H. Lin, "Experimental study on Friction Stir Welding of copper metals," J. Mater. Process. Technol., vol. 210, pp. 1667-1672, 2010, doi: 10.1016/j.jmatprotec.2010.05.019.
[12] V. V. Ramalingam, A. V. Vidyapeetham, P. Ramasamy, and A. V. Vidyapeetham, "Modelling of peak temperature during friction stir processing of magnesium Modelling of peak temperature during friction stir processing of magnesium alloy AZ91," IOP Conf. Ser. Mater. Sci. Eng., no. August, 2018, doi: 10.1088/1757-899X/310/1/012019.

### Brief description of the drawings

In the following, in order to further demonstrate the present invention, illustrative and non-restrictive embodiments are discussed, as shown in the drawings, which show:
- Fig. 1: a perspective view of a waste fraction processing friction extruder unit according to the invention,
- Fig. 2: a partial cross sectional view of the friction extrude unit according to Fig. 1,
- Fig. 3: an exploded view of the friction extrude unit according to Fig. 1 and 2,
- Fig. 4a to c: detailed views of the friction extruder screw of the friction extruder unit according to Fig. 1 to 3,
- Fig. 5: a schematic drawing of optional devices involved when producing wires with the friction extruder unit according to the present invention.

### Detailed description of embodiments of the invention

In the following figures identical reference signs refer to identical features unless expressly depicted otherwise.

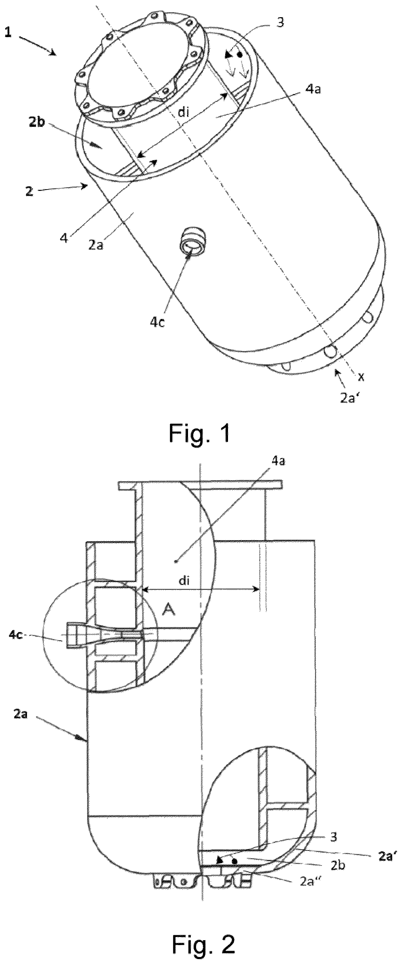

Fig. 1 shows a perspective view of a waste fraction processing friction extruder unit 1 according to the invention. The waste fraction processing friction extruder unit 1 comprises a receptacle 2 for receiving fragments of metallic or polymeric waste fractions 3. The receptacle 2 comprises an outer tube 2a, said outer tube 2a being closed at an end section 2a' defining a space 2b (see in particular Fig. 2) for collecting waste fractions 3 entered into the receptacle 2.

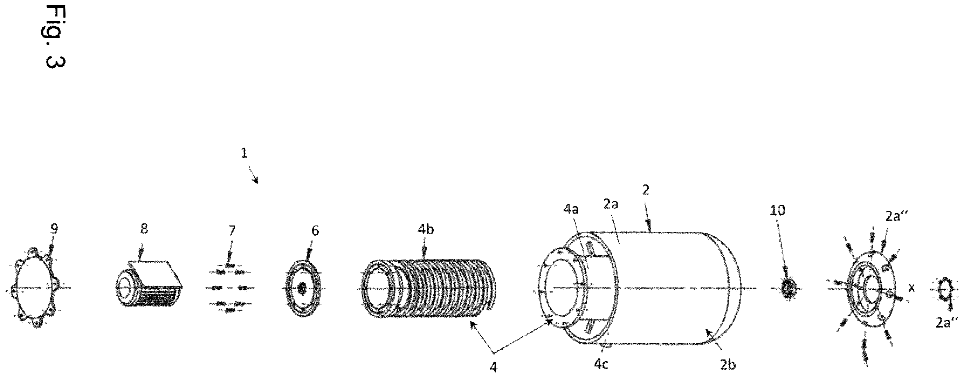

The friction extruder unit 1 further comprises an extrusion device 4. As can be seen from the exploded view of Fig. 3 said extrusion device 4 comprises a cylindrically shaped inner tube 4a, said inner tube 4a having a longitudinal axis x and an inner diameter di (see Fig. 2), a friction extruder screw 4b that is coaxially arranged within the inner tube 4a, and an extrusion nozzle 4c connected to the inner tube 4a. The friction extruder screw 4b extends at least until to the extrusion nozzle 4c, said extrusion nozzle 4c being configured to receive material transferred by the friction extruder screw 4b towards the nozzle 4c and to shape, from said material, a continuous wire 5a or filament 5b.

The inner tube 4a extends from the space 2b for collecting waste fractions 3, and wherein the friction extruder screw 4b extends within the inner tube 4a into the space 2b for collecting waste fractions 3.

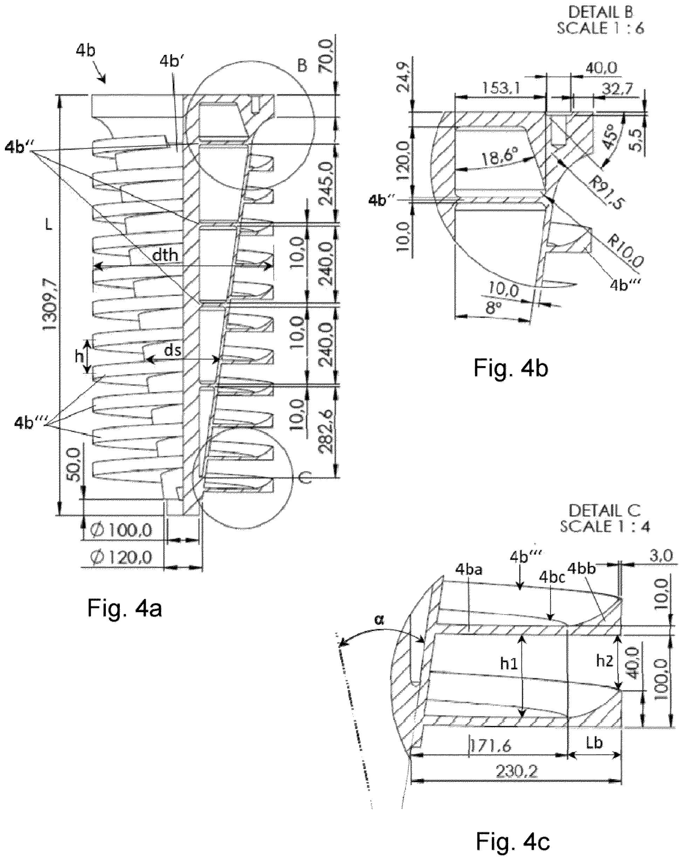

The diameter dth (see Fig. 4a) of the thread of the friction extruder screw 4b essentially matches the inner diameter dit (see Fig. 2) of the inner tube 4a. Preferably, the diameter dth of the thread of the friction extruder screw 4b is within a range of 95% to 99% of the inner diameter dit of the inner tube 4a. The friction extruder screw 4b has a shaft 4b' of conic shape, wherein the diameter ds of the conic shape of the shaft 4b' increases with increasing distance from the space 2b for collecting waste fractions 3.

As can be seen from Fig. 1 and Fig. 2, the outer tube 2a has a cylindrical shape and is arranged coaxially with the inner tube 4a, and wherein the end section 2a' of the outer tube 2a is closed with a bottom element 2a". Fig. 3 shows that this bottom element 2a" can also be made out of two connectable pieces.

Regarding Fig. 3, reference sign 6 depicts a coupling for connecting the screw 4b to an electric motor 8 by using the bolts 7. Reference sign 9 refers to a top cover. The screw 4b is connected with a ball bearing 10 to facilitate smooth rotation. The electric motor 8 that is configured to rotate the friction extruder screw 4b around its axis x.

As can be seen in Fig. 2, the end section 2a' of the outer tube 2a is arranged on a lower end of the outer tube 2a.

Fig. 4b shows an upper section of the screw 4b. Fig. 4c shows a lower section of the screw 4b. The cone angle α of the conic shape of the shaft 4b' is preferably between 10° and 22°, in particular between 15° and 17°.

Preferably, the cone angle α is essentially constant along the longitudinal extension of the shaft 4b'.

Fig. 4a shows that the lead h of the thread of the friction extruder screw 4b. Preferably, this lease h is between 80mm and 120mm. Please note that all the dimensioning specifications shown in Fig. 4a to Fig. 4c are in the unit "mm" and are only exemplary and non-restrictive.

The longitudinal length L of the friction extruder screw 4b is preferably between 1000mm and 1600mm.

The friction extruder screw 4b is preferably hollow and comprises coaxial horizontal discs 4b" (see Fig. 4a) being distanced to another along the longitudinal axis x of the screw 4b and extending orthogonal to the longitudinal axis x along the diameter of the conic shape of the shaft 4b' in order to increase the stiffness of the extruder screw 4b. Preferably, the flanks 4b‴ of the thread of the friction extruder screw 4b essentially extend orthogonally from the longitudinal axis x of the friction extruder screw 4b, and wherein preferably the flank angle of these flanks is zero.

Fig. 4c shows that preferably, each flank 4b‴ of the thread of the friction extruder screw 4b comprises a straight section 4ba having a rectangular cross section, said straight section 4ba extending towards a broadened end section 4bb, wherein broadening of the cross section of the flank 4b‴ is realized solely by expansion of an upper side 4bc of the flank 4b'". The upper side 4bc is curved upwards thus increasing the cross section of the broadened end section 4bb when compared to the straight section 4ba, wherein the upper side faces away from the space 2b for collecting waste fractions 3. At the end of broadened end section 4bb the upwards curved shape of the flank 4b‴ reduces the distance to the proximate upper flank h2 between 20% and 50% when compared to the distance between the straight sections 4ba of the flanks h1. The length Lb of broadened end section amounts between 25% to 70%, in particular 40% to 60%, of the lead h of the thread of the friction extruder screw 4b.

## Claims

1. Waste fraction processing friction extruder unit (1) comprising
- a receptacle (2) for receiving fragments of metallic or polymeric waste fractions (3), said receptacle (2) comprising an outer tube (2a), said outer tube (2a) being closed at an end section (2a') defining a space (2b) for collecting waste fractions (3) entered into the receptacle (2), and
- an extrusion device (4), said extrusion device (4) comprising
* a cylindrically shaped inner tube (4a), said inner tube (4a) having a longitudinal axis (x) and an inner diameter (di),
* a friction extruder screw (4b) that is coaxially arranged within the inner tube (4a), and
* an extrusion nozzle (4c) connected to the inner tube (4a), wherein the friction extruder screw (4b) extends at least until to the extrusion nozzle (4c), said extrusion nozzle (4c) being configured to receive material transferred by the friction extruder screw (4b) towards the nozzle (4c) and to shape, from said material, a continuous wire (5a) or filament (5b),
wherein the inner tube (4a) extends from the space (2b) for collecting waste fractions (3), and wherein the friction extruder screw (4b) extends within the inner tube (4a) into the space (2b) for collecting waste fractions (3),
**characterized in that**
the diameter (dth) of the thread of the friction extruder screw (4b) essentially matches the inner diameter (dit) of the inner tube (4a), and wherein the friction extruder screw (4b) has a shaft (4b') of conic shape, wherein the diameter (ds) of the conic shape of the shaft (4b') increases with increasing distance from the space (2b) for collecting waste fractions (3).

2. Waste fraction processing friction extruder unit (1) according to claim 1, wherein the outer tube (2a) has a cylindrical shape and is arranged coaxial with the inner tube (4a), and wherein the end section (2a') of the outer tube (2a) is closed with a bottom element (2a").

3. Waste fraction processing friction extruder unit (1) according to claim 1 or 2, wherein the end section (2a') of the outer tube (2a) is arranged on a lower end of the outer tube (2a).

4. Waste fraction processing friction extruder unit (1) according to any of the preceding claims, wherein the waste fraction processing friction extruder unit (1) further comprises an electric motor (8) that is configured to rotate the friction extruder screw (4b) around its axis (x).

5. Waste fraction processing friction extruder unit (1) according to any of the preceding claims, wherein the diameter (dth) of the thread of the friction extruder screw (4b) is within a range of 95% to 99% of the inner diameter (dit) of the inner tube (4a).

6. Waste fraction processing friction extruder unit (1) according to any of the preceding claims, wherein the cone angle (α) of the conic shape of the shaft (4b') is between 10° and 22°, in particular between 15° and 17°.

7. Waste fraction processing friction extruder unit (1) according to claim 6, wherein the cone angle (α) is essentially constant along the longitudinal extension of the shaft (4b').

8. Waste fraction processing friction extruder unit (1) according to any of the preceding claims, wherein the lead (h) of the thread of the friction extruder screw (4b) is between 80mm and 120mm.

9. Waste fraction processing friction extruder unit (1) according to any of the preceding claims, wherein the longitudinal length (L) of the friction extruder screw (4b) is between 1000mm and 1600mm.

10. Waste fraction processing friction extruder unit (1) according to any of the preceding claims, wherein the friction extruder screw (4b) is hollow and comprises coaxial horizontal discs (4b") being distanced to another along the longitudinal axis (x) of the screw (4b) and extending orthogonal to the longitudinal axis (x) along the diameter of the conic shape of the shaft (4b') in order to increase the stiffness of the extruder screw (4b).

11. Waste fraction processing friction extruder unit (1) according to any of the preceding claims, wherein the friction extruder screw (4b) is made of stainless steel and/or nickel based alloys.

12. Waste fraction processing friction extruder unit (1) according to any of the preceding claims, wherein flanks (4b‴) of the thread of the friction extruder screw (4b) essentially extend orthogonally from the longitudinal axis (x) of the friction extruder screw (4b), and wherein preferably the flank angle of these flanks is zero.

13. Waste fraction processing friction extruder unit (1) according to claim 12, wherein each flank (4b‴) of the thread of the friction extruder screw (4b) comprises
*a straight section (4ba) having a rectangular cross section, said straight section (4ba) extending towards
*a broadened end section (4bb), wherein broadening of the cross section of the flank (4b‴) is realized solely by expansion of an upper side (4bc) of the flank (4b‴), said upper side (4bc) being curved upwards thus increasing the cross section of the broadened end section (4bb) when compared to the straight section (4ba), wherein the upper side faces away from the space (2b) for collecting waste fractions (3).
B: orthogonal extension of the straight section

14. Waste fraction processing friction extruder unit (1) according to claim 13, wherein at the end of broadened end section (4bb) the upwards curved shape of the flank (4b‴) reduces the distance to the proximate upper flank (h2) between 20% and 50% when compared to the distance between the straight sections (4ba) of the flanks (h1).

15. Waste fraction processing friction extruder unit (1) according to claim 13 or 14, wherein the length (Lb) of broadened end section amounts between 25% to 70%, in particular 40% to 60%, of the lead (h) of the thread of the friction extruder screw (4b).

## Patentansprüche

1. Friktions-Extrudereinheit (1) zur Verarbeitung von Abfallfraktionen, aufweisend
- einen Behälter (2) zur Aufnahme von Fragmenten metallischer oder polymerer Abfallfraktionen (3), wobei der Behälter (2) ein äußeres Rohr (2a) aufweist, wobei das äußere Rohr (2a) an einem Endabschnitt (2a') geschlossen ist, der einen Raum (2b) zum Sammeln der in den Behälter (2) eingeführten Abfallfraktionen (3) definiert, und
- eine Extrusionsvorrichtung (4), wobei die Extrusionsvorrichtung (4) aufweist
* ein zylindrisch geformtes Innenrohr (4a), wobei das Innenrohr (4a) eine Längsachse (x) und einen Innendurchmesser (di) aufweist,
* eine Friktions-Extruderschnecke (4b), die koaxial innerhalb des Innenrohrs (4a) angeordnet ist, und
* eine Extrusionsdüse (4c), die mit dem Innenrohr (4a) verbunden ist, wobei sich die Friktions-Extruderschnecke (4b) zumindest bis zur Extrusionsdüse (4c) erstreckt, wobei die Extrusionsdüse (4c) so konfiguriert ist, dass sie Material aufnimmt, das von der Friktions-Extruderschnecke (4b) in Richtung der Düse (4c) transportiert wird, und dass sie aus dem Material einen kontinuierlichen Draht (5a) oder ein Filament (5b) formt,
wobei sich das Innenrohr (4a) von dem Raum (2b) zum Sammeln von Abfallfraktionen (3) erstreckt, und wobei sich die Friktions-Extruderschnecke (4b) innerhalb des Innenrohrs (4a) in den Raum (2b) zum Sammeln von Abfallfraktionen (3) erstreckt,
**dadurch gekennzeichnet, dass**
der Durchmesser (dth) des Gewindes der Friktions-Extruderschnecke (4b) im Wesentlichen dem Innendurchmesser (dit) des Innenrohres (4a) entspricht, und wobei die Friktions-Extruderschnecke (4b) einen Schaft (4b') mit konischer Form aufweist, wobei der Durchmesser (ds) der konischen Form des Schaftes (4b') mit zunehmendem Abstand vom Raum (2b) zum Sammeln der Abfallfraktionen (3) zunimmt.

2. Friktions-Extrudereinheit (1) zur Verarbeitung von Abfallfraktionen nach Anspruch 1, wobei das Außenrohr (2a) eine zylindrische Form aufweist und koaxial zum Innenrohr (4a) angeordnet ist, und wobei der Endabschnitt (2a') des Außenrohrs (2a) mit einem Bodenelement (2a") verschlossen ist.

3. Friktions-Extrudereinheit (1) zur Verarbeitung von Abfallfraktionen nach Anspruch 1 oder 2, wobei der Endabschnitt (2a') des Außenrohrs (2a) an einem unteren Ende des Außenrohrs (2a) angeordnet ist.

4. Friktions-Extrudereinheit (1) zur Verarbeitung von Abfallfraktionen nach einem der vorhergehenden Ansprüche, wobei die Friktions-Extrudereinheit (1) zur Verarbeitung von Abfallfraktionen ferner einen Elektromotor (8) aufweist, der dazu ausgebildet ist, die Friktions-Extruderschnecke (4b) um ihre Achse (x) zu drehen.

5. Friktions-Extrudereinheit (1) zur Verarbeitung von Abfallfraktionen nach einem der vorhergehenden Ansprüche, wobei der Durchmesser (dth) des Gewindes der Friktions-Extruderschnecke (4b) in einem Bereich von 95% bis 99% des Innendurchmessers (dit) des Innenrohrs (4a) liegt.

6. Friktions-Extrudereinheit (1) zur Verarbeitung von Abfallfraktionen nach einem der vorhergehenden Ansprüche, wobei der Konuswinkel (α) der konischen Form der Welle (4b') zwischen 10° und 22°, insbesondere zwischen 15° und 17° liegt.

7. Friktions-Extrudereinheit (1) zur Verarbeitung von Abfallfraktionen nach Anspruch 6, wobei der Konuswinkel (α) entlang der Längserstreckung der Welle (4b') im Wesentlichen konstant ist.

8. Friktions-Extrudereinheit (1) zur Verarbeitung von Abfallfraktionen nach einem der vorhergehenden Ansprüche, wobei die Steigung (h) des Gewindes der Reibextruderschnecke (4b) zwischen 80 mm und 120 mm beträgt.

9. Friktions-Extrudereinheit (1) zur Verarbeitung von Abfallfraktionen nach einem der vorhergehenden Ansprüche, wobei die Länge in Längsrichtung (L) der Friktions-Extruderschnecke (4b) zwischen 1000 mm und 1600 mm beträgt.

10. Friktions-Extrudereinheit (1) zur Verarbeitung von Abfallfraktionen nach einem der vorhergehenden Ansprüche, wobei die Friktions-Extruderschnecke (4b) hohl ist und koaxiale horizontale Scheiben (4b") aufweist, die entlang der Längsachse (x) der Schnecke (4b) voneinander beabstandet sind und sich orthogonal zur Längsachse (x) entlang des Durchmessers der konischen Form der Welle (4b') erstrecken, um die Steifigkeit der Extruderschnecke (4b) zu erhöhen.

11. Friktions-Extrudereinheit (1) zur Verarbeitung von Abfallfraktionen nach einem der vorhergehenden Ansprüche, wobei die Friktions-Extruderschnecke (4b) aus rostfreiem Stahl und/oder nickelbasierten Legierungen besteht.

12. Friktions-Extrudereinheit (1) zur Verarbeitung von Abfallfraktionen nach einem der vorhergehenden Ansprüche, wobei Flanken (4b‴) des Gewindes der Friktions-Extruderschnecke (4b) im Wesentlichen orthogonal zur Längsachse (x) der Friktions-Extruderschnecke (4b) verlaufen, und wobei vorzugsweise der Flankenwinkel dieser Flanken Null ist.

13. Friktions-Extrudereinheit (1) zur Verarbeitung von Abfallfraktionen nach Anspruch 12, wobei jede Flanke (4b‴) des Gewindes der Reibungsextruderschnecke (4b) aufweist
*einen geraden Abschnitt (4ba) mit einem rechteckigen Querschnitt, wobei sich der gerade Abschnitt (4ba) in Richtung
*eines verbreiterten Endabschnitts (4bb) erstreckt, wobei die Verbreiterung des Querschnitts der Flanke (4b‴) ausschließlich durch Aufweitung einer Oberseite (4bc) der Flanke (4b‴) realisiert wird, wobei die Oberseite (4bc) nach oben gekrümmt ist, wodurch der Querschnitt des verbreiterten Endabschnitts (4bb) im Vergleich zu dem geraden Abschnitt (4ba) vergrößert wird, wobei die Oberseite von dem Raum (2b) zum Sammeln von Abfallfraktionen (3) abgewandt ist.
B: orthogonale Verlängerung des geraden Abschnitts

14. Friktions-Extrudereinheit (1) zur Verarbeitung von Abfallfraktionen nach Anspruch 13, wobei am Ende des verbreiterten Endabschnitts (4bb) die nach oben gekrümmte Form der Flanke (4b‴) den Abstand zur nächstgelegenen oberen Flanke (h2) zwischen 20% und 50% im Vergleich zum Abstand zwischen den geraden Abschnitten (4ba) der Flanken (h1) verringert.

15. Friktions-Extrudereinheit (1) zur Verarbeitung von Abfallfraktionen nach Anspruch 13 oder 14, wobei die Länge (Lb) des verbreiterten Endabschnitts zwischen 25% bis 70%, insbesondere 40% bis 60%, der Steigung (h) des Gewindes der Friktionsextruderschnecke (4b) beträgt.

## Revendications

1. Unité d'extrusion par friction (1) pour le traitement de fractions de déchets, comprenant
- un réceptacle (2) adapté pour recevoir des fragments de fractions de déchets métalliques ou polymères (3), ledit réceptacle (2) comprenant un tube extérieur (2a), ledit tube extérieur (2a) étant fermé à une section d'extrémité (2a') définissant un espace (2b) destiné à recueillir les fractions de déchets (3) introduites dans le réceptacle (2), et
- un dispositif d'extrusion (4), ledit dispositif d'extrusion (4) comprenant
* un tube intérieur (4a) de forme cylindrique, ledit tube intérieur (4a) ayant un axe longitudinal (x) et un diamètre intérieur (di),
* une vis d'extrusion à friction (4b) disposée coaxialement à l'intérieur du tube intérieur (4a), et
* une buse d'extrusion (4c) reliée au tube intérieur (4a), dans laquelle la vis d'extrusion à friction (4b) s'étend au moins jusqu'à la buse d'extrusion (4c), ladite buse d'extrusion (4c) étant configurée pour recevoir le matériau transféré par la vis d'extrusion à friction (4b) vers la buse (4c) et pour façonner, à partir de ce matériau, un fil continu (5a) ou un filament (5b),
dans lequel le tube intérieur (4a) s'étend à partir de l'espace (2b) de collecte des fractions de déchets (3), et dans lequel la vis d'extrusion à friction (4b) s'étend à l'intérieur du tube intérieur (4a) dans l'espace (2b) de collecte des fractions de déchets (3),
**caractérisé par le fait que**
le diamètre (dth) du filetage de la vis d'extrusion à friction (4b) correspond essentiellement au diamètre intérieur (dit) du tube intérieur (4a), et la vis d'extrusion à friction (4b) a une tige (4b') de forme conique, le diamètre (ds) de la forme conique de la tige (4b') augmentant à mesure que l'on s'éloigne de l'espace (2b) de collecte des fractions de déchets (3).

2. Unité d'extrusion par friction (1) pour le traitement de fractions de déchets selon la revendication 1, dans laquelle le tube extérieur (2a) a une forme cylindrique et est disposé de manière coaxiale avec le tube intérieur (4a), et dans laquelle la section d'extrémité (2a') du tube extérieur (2a) est fermée par un élément de fond (2a").

3. Unité d'extrusion par friction (1) pour le traitement de fractions de déchets selon la revendication 1 ou 2, dans laquelle la section d'extrémité (2a') du tube extérieur (2a) est disposée sur une extrémité inférieure du tube extérieur (2a).

4. Unité d'extrusion par friction (1) pour le traitement de fractions de déchets selon l'une quelconque des revendications précédentes, dans laquelle l'unité d'extrusion par friction de traitement de fraction de déchets (1) comprend en outre un moteur électrique (8) qui est configuré pour faire tourner la vis d'extrusion par friction (4b) autour de son axe (x).

5. Unité d'extrusion par friction (1) pour le traitement de fractions de déchets selon l'une quelconque des revendications précédentes, dans laquelle le diamètre (dth) du filetage de la vis d'extrusion par friction (4b) est compris entre 95% et 99% du diamètre intérieur (dit) du tube intérieur (4a).

6. Unité d'extrusion par friction (1) pour le traitement de fractions de déchets selon l'une quelconque des revendications précédentes, dans laquelle l'angle du cône (α) de la forme conique de l'arbre (4b') est compris entre 10° et 22°, en particulier entre 15° et 17°.

7. Unité d'extrusion par friction (1) pour le traitement de fractions de déchets selon la revendication 6, dans laquelle l'angle du cône (α) est essentiellement constant le long de l'extension longitudinale de l'arbre (4b').

8. Unité d'extrusion par friction (1) pour le traitement de fractions de déchets selon l'une quelconque des revendications précédentes, dans laquelle l'avance (h) du filetage de la vis d'extrusion à friction (4b) est comprise entre 80 mm et 120 mm.

9. Unité d'extrusion par friction (1) pour le traitement de fractions de déchets selon l'une quelconque des revendications précédentes, dans laquelle la longueur longitudinale (L) de la vis d'extrusion par friction (4b) est comprise entre 1 000 mm et 1 600 mm.

10. Unité d'extrusion par friction (1) pour le traitement de fractions de déchets selon l'une quelconque des revendications précédentes, dans laquelle la vis d'extrusion par friction (4b) est creuse et comprend des disques horizontaux coaxiaux (4b") distants les uns des autres le long de l'axe longitudinal (x) de la vis (4b) et s'étendant orthogonalement à l'axe longitudinal (x) le long du diamètre de la forme conique de l'arbre (4b') afin d'augmenter la rigidité de la vis d'extrusion (4b).

11. Unité d'extrusion par friction (1) pour le traitement de fractions de déchets selon l'une quelconque des revendications précédentes, dans laquelle la vis d'extrusion à friction (4b) est fabriquée en acier inoxydable et/ou en alliages à base de nickel.

12. Unité d'extrusion par friction (1) pour le traitement de fractions de déchets selon l'une quelconque des revendications précédentes, dans laquelle les flancs (4b‴) du filetage de la vis d'extrusion à friction (4b) s'étendent essentiellement de manière orthogonale à partir de l'axe longitudinal (x) de la vis d'extrusion à friction (4b), et dans laquelle, de préférence, l'angle de flanc de ces flancs est égal à zéro.

13. Unité d'extrusion par friction (1) pour le traitement de fractions de déchets selon la revendication 12, dans laquelle chaque flanc (4b‴) du filetage de la vis d'extrusion à friction (4b) comprend
*une section droite (4ba) ayant une section transversale rectangulaire, ladite section droite (4ba) s'étendant vers
*une section d'extrémité élargie (4bb), dans laquelle l'élargissement de la section transversale du flanc (4b‴) est réalisé uniquement par l'expansion d'un côté supérieur (4bc) du flanc (4b‴), ledit côté supérieur (4bc) étant incurvé vers le haut, ce qui augmente la section transversale de la section d'extrémité élargie (4bb) par rapport à la section droite (4ba), dans laquelle le côté supérieur est orienté à l'opposé de l'espace (2b) pour la collecte des fractions de déchets (3).
B : extension orthogonale de la section droite

14. Unité d'extrusion par friction (1) pour le traitement de fractions de déchets selon la revendication 13, dans laquelle, à l'extrémité de la section d'extrémité élargie (4bb), la forme incurvée vers le haut du flanc (4b‴) réduit la distance jusqu'au flanc supérieur proche (h2) entre 20% et 50% par rapport à la distance entre les sections droites (4ba) des flancs (h1).

15. Unité d'extrusion par friction (1) pour le traitement de fractions de déchets selon la revendication 13 ou 14, dans laquelle la longueur (Lb) de la section d'extrémité élargie représente entre 25% et 70%, en particulier 40% et 60%, de la longueur (h) du filetage de la vis d'extrusion à friction (4b).
